# EUROPÄISCHE PATENTSCHRIFT

(11) **EP 3 365 469 B1**
(45) Veröffentlichungstag und Bekanntmachung des Hinweises auf die Patenterteilung: **01.01.2020**
(21) Anmeldenummer: 16785377.9
(22) Anmeldetag: 05.10.2016
(51) Int. Cl.: C23C 2/06, C23C 2/26, C23C 2/28, C21D 9/48, C25D 5/50, C25D 7/06

(54) **VERFAHREN ZUM HERSTELLEN EINES STAHLBAUTEILS FÜR EIN FAHRZEUG**
METHOD FOR PRODUCING A STEEL COMPONENT FOR A VEHICLE
PROCÉDÉ DE FABRICATION D'UN ÉLÉMENT STRUCTURAL EN ACIER POUR UN VÉHICULE

(30) Priorität: 20.10.2015 DE 102015220347
(43) Veröffentlichungstag der Anmeldung: 29.08.2018
(73) Patentinhaber: ThyssenKrupp Steel Europe AG, 47166 Duisburg (DE); thyssenkrupp AG, 45143 Essen (DE)
(72) Erfinder: SIKORA, Sascha, 44534 Lünen (DE); GORSCHLÜTER, Jörg, 44269 Dortmund (DE); KÖYER, Maria, 44141 Dortmund (DE)
(74) Vertreter: ThyssenKrupp Steel Europe AG
(86) Internationale Anmeldenummer: PCT/EP2016/073709
(87) Internationale Veröffentlichungsnummer: WO 2017/067782

(56) Entgegenhaltungen:
- EP-A1- 2 848 715
- DE-A1-102009 003 508
- DE-A1-102009 017 326
- DE-A1-102013 010 025

## Beschreibung

Die Erfindung betrifft ein Verfahren zum Herstellen eines Bauteils mit einem zumindest bereichsweise hutförmigen oder omegaförmigen Profilquerschnitt für ein Fahrzeug, umfassend folgende Schritte:
Bereitstellen eines Werkstücks aus einem vergütbaren Stahlwerkstoff, welches beidseitig mit einer zinkhaltigen Beschichtung versehen ist,
zumindest teilweises Erwärmen des Werkstücks auf eine Temperatur oberhalb von Ac1, Einlegen des zumindest teilweise warmen Werkstücks in ein Warmumform- und/oder Presshärtewerkzeug, welches mindestens einen Stempel und mindestens eine Matrize umfasst,
Zufahren des Werkzeugs durch Relativbewegung des Stempels und/oder der Matrize zueinander und Warmumformen und/oder Presshärten des Werkstücks, wobei zumindest ein Bereich des warmen Werkstücks im geschlossenen Werkzeug derart abgekühlt wird, dass sich zumindest teilweise ein Härtegefüge ausbildet.

Ferner betrifft die Erfindung ein Bauteil, insbesondere hergestellt nach dem erfindungsgemäßen Verfahren sowie eine entsprechende Verwendung des Bauteils.

Pressgehärtete Bauteile sind heutzutage im Automobilbau nicht mehr wegzudenken. Konventionelle Bauteile aus Stahl wurden durch neue hoch- und höherfeste Stahlwerkstoffe substituiert, wobei durch die Erhöhung der Festigkeit bzw. die hohe Festigkeit der Werkstoffe die Materialdicke bei gleichbleibenden mechanischen Eigenschaften reduziert werden konnte, so dass positiv Einfluss auf eine Reduzierung des Gesamtgewichts des Fahrzeugs genommen werden kann und damit einhergehend auch eine Reduzierung des CO₂-Ausstosses möglich ist. Als Stahlwerkstoff wird ein vergütbarer Stahl beispielsweise ein Mangan-Bor-Stahl eingesetzt, wobei der derzeit gängigste Vertreter der 22MnB5 ist. Die Herstellung von pressgehärteten Bauteilen erfolgt in der Regel aus beschichteten Formplatinen oder aus beschichteten Platinen, welche zunächst kalt zu vorgeformten Halbzeugen geformt werden. Die Art der Beschichtung kann organisch sein, jedoch haben sich in der Praxis anorganische Beschichtungen auf Aluminium- bzw. Aluminium-Silizium-Basis und Zink-Basis etabliert. Bei Beschichtungen basierend auf Aluminium bzw. Aluminium-Silizium findet während des Erwärmungsprozesses (Austenitisierung) eine Diffusion von Eisen aus dem Grundwerkstoff (22MnB5) in die Beschichtung statt und es bildet sich eine AlSi-Fe-Schicht aus, welche hinsichtlich der Korrosionsschutzeigenschaften eine sogenannte Barrierewirkung aufweist. Ein aktiver, kathodischer Korrosionsschutz liegt bei einer Aluminium-Basis-Beschichtung nicht vor. Einen aktiven, kathodischen Korrosionsschutz stellen jedoch Beschichtungen auf Zink-Basis bereit. Zwar findet wiederum während des Erwärmungsprozesses (Austenitisierung) eine Diffusion von Eisen aus dem Grundwerkstoff (22MnB5) in die Beschichtung statt. Durch die Diffusion wird zwar der Schmelzpunkt der mit Eisen angereicherten Zinkbeschichtung angehoben, jedoch kann eine Ausbildung von flüssigen Zinkphasen (Lötrissigkeit oder auch unter "liquid embrittlement" bekannt) nicht vollständig unterdrückt werden. Durch die Lötrissigkeit entstehen beim anschließenden Warmumformen und/oder Presshärten je nach Umformgrad, bedingt durch die Umformung an der Oberfläche der Beschichtung Risse, welche sich in Richtung des Grundwerkstoffs infolge der Materialbeanspruchung (Druck-Zug) weiter ausbreiten und bis in den Grundwerkstoff hineinreichen können. Die Ausbreitung der Risse ist der Anwesenheit von flüssigen Zinkphasen auf den Korngrenzen des Materials geschuldet, die das Material schwächen und durch die Druck-Zug-Beanspruchung eine Rissfortbildung in der Beschichtung bis in den Grundwerkstoff begünstigen. Derartige, rissbehaftete pressgehärtete Bauteile können eine Reduzierung der Bauteilfestigkeit im Crashfall und eine Verkürzung der Lebensdauererwartung insbesondere bei zyklischer Belastung bewirken.

Das Phänomen der Rissentstehung beim Warmumformen von zinkbeschichteten Platinen ist beispielsweise in der Veröffentlichung (Drillet et al. "Study of cracks propagation inside the steel on press hardened steel zinc based coatings", La Metallurgia Italiana - n. 1/2012, pages 3-8) offenbart. An einem warmumzuformenden und presszuhärtenden omegaförmigen Profilquerschnitt wurden Untersuchungen durchgeführt. Es wurde festgestellt, dass Risse begünstigt durch die im Material erwärmungsbedingt vorliegenden flüssigen Zinkhasen insbesondere im Bereich der zu erzeugenden Zarge (kritischer Bereich) aufgrund zunächst einer Druck- und/oder anschließenden Zug-Beanspruchung auf der der Matrize zugewandten Seite entstehen und sich bis in den Grundwerkstoff erstrecken können. Je komplexer der Umformgrad, insbesondere im Zargenbereich, umso rissanfälliger und damit verbunden, umso tiefer kann sich der Riss in den Grundwerkstoff ausbilden.

Aus der europäischen Anmeldung EP 2 848 715 A1 ist bekannt, dass für die Warmumformung Halbzeuge mit einer elektrolytisch aufgebrachten Zinkschicht mit einer geringen Schichtdicke bereitgestellt werden können, bei welchen eine Verflüssigung von Zink bei der Warmumformung und damit die Neigung zur Rissbildung reduziert wird.

Es ist die Aufgabe der vorliegenden Erfindung ausgehend von dem Stand der Technik, ein Verfahren zum Herstellen eines Bauteils für ein Fahrzeug, ein Bauteil für ein Fahrzeug sowie eine Verwendung des Bauteils anzugeben, wobei neben einem aktiven Korrosionsschutz auch eine ausreichende Bauteilfestigkeit im Crashfall und Lebensdauererwartung insbesondere bei zyklischer Belastung gewährleistet werden kann.

Die Aufgabe wird gemäß eines erfindungsgemäßen Verfahrens dadurch gelöst, dass das Werkstück eine erste Oberfläche mit einer geringeren Auflagenstärke der zinkhaltigen Beschichtung im Vergleich zur zweiten Oberfläche des Werkstücks und eine erste Oberfläche mit einer Auflagenstärke < 4*µm* und eine zweite Oberfläche mit einer Auflagenstärke ≥ *4,5µm* der zinkhaltigen Beschichtung jeweils im noch nicht pressgehärteten Zustand aufweist, wobei das Werkstück derart im Warmumform- und/oder Presshärtewerkzeug eingelegt wird, dass die erste Oberfläche des Werkstücks auf der bei der Bauteilfertigung überwiegend auf Druck und/oder Zug belasteten Seite der überwiegend konkav ausgebildeten Werkzeugseite positioniert wird.

Das erfindungsgemäße Verfahren zum Herstellen eines Bauteils für ein Fahrzeug umfasst zunächst den Schritt des Bereitstellens eines Werkstücks aus einem vergütbaren Stahlwerkstoff, welches beidseitig mit einer zinkhaltigen Beschichtung versehen ist. Als vergütbare Stahlwerkstoffe kommen im Wesentlichen Mangan-Bor-Stähle zum Einsatz. Denkbar ist auch die Verwendung anderer Stahlgüten, in welchen infolge einer Wärmebehandlung und im Vergleich zum Anlieferungszustand eine höhere Festigkeit erzeugt werden kann. Ein weiterer Schritt umfasst zumindest ein teilweises Erwärmen des Werkstücks auf eine Temperatur oberhalb von A_{c1}, insbesondere oberhalb von A_{c3}. Das Werkstück wird zunächst partiell oder vollständig auf Austenitisierungstemperatur erwärmt, wobei je nach Anforderung des zu fertigenden Bauteils sowie dessen Verwendungszweck im Fahrzeug im Werkstück (partiell) unterschiedliche Gefügestrukturen oder eine durchgehend einheitliche Gefügestruktur eingestellt werden können. Dies kann über entsprechende Öfen und/oder über entsprechende Warmumform-und/oder Presshärtewerkzeuge erfolgen. Sind unterschiedliche Gefügestrukturen im Werkstück zu berücksichtigen, wird von "tailored tempering" gesprochen, d. h. es wird mindestens ein Bereich mit einem harten Gefüge und mindestens ein Bereich mit einem weichen Gefüge, welches gegenüber dem harten Gefüge duktiler ist, eingestellt. Ein weiterer Schritt umfasst das Einlegen des zumindest teilweise warmen Werkstücks in ein Warmumform- und/oder Presshärtewerkzeug, welches mindestens einen Stempel und mindestens eine Matrize umfasst. Mindestens eine Werkzeugseite ist überwiegend konkav ausgebildet, vorzugsweise die Matrize und mindestens eine Werkzeugseite ist überwiegend konvex ausgebildet, vorzugsweise der Stempel. Das Zufahren des Werkzeugs durch Relativbewegung des Stempels und/oder der Matrize zueinander und Warmumformen und/oder Presshärten des Werkstücks umfasst einen weiteren Schritt, wobei zumindest ein Bereich des warmen Werkstücks im geschlossenen Werkzeug derart abgekühlt wird, dass sich zumindest teilweise ein Härtegefüge ausbildet. Das Werkstück wird vollständig oder zumindest partiell gehärtet, was durch eine schnelle Abkühlung in einem insbesondere aktiv gekühlten Werkzeug im Zuge des Warmumformens und Presshärtens (direkte Warmumformung) oder im Zuge des Presshärtens (indirekte Warmumformung) erfolgt, wobei sich die Gefügestruktur des zumindest teilweise austenitisierten Bereichs des Werkstücks durch schroffes Abkühlen in ein martensitisches und/oder bainitisches Gefüge umwandelt, wobei das Erzielen eines martensitischen Gefüges besonders bevorzugt ist. Erfindungsgemäß weisen die erste Oberfläche mit einer Auflagenstärke < 4*µm* und eine zweite Oberfläche mit einer Auflagenstärke ≥ 4,5*µm* der zinkhaltigen Beschichtung jeweils im noch nicht pressgehärteten Zustand auf.

Die Erfinder haben überraschend festgestellt, dass durch die Reduzierung der Auflagenstärke der zinkhaltigen Beschichtung auf der ersten Oberfläche des Werkstücks, welche auf der bei der Bauteilfertigung überwiegend auf Druck und/oder Zug belasteten Seite, insbesondere der überwiegend konkav ausgebildeten Werkzeugseite positioniert wird, vorzugsweise mit der Matrize des Werkzeugs in Kontakt gebracht wird, gegenüber in der Praxis üblichen Auflagenstärken die Risse respektive die Risstiefe im kritischen Bereich auf ein Maß reduziert werden kann, welche den Anforderungen an die Bauteilfestigkeit im Crashfall und der Lebensdauererwartung insbesondere bei zyklischen Belastungen genügen. Eine Rissentstehung lässt sich aufgrund des vorgenannten Phänomens nicht gänzlich vermeiden. Durch das Herabsenken der Auflagenstärke reduziert sich auch das Zink-Angebot und somit können weniger flüssige Zinkphasen während des Erwärmungsprozesses im Material entstehen, welche das Material schwächen.

Gemäß einer ersten Ausgestaltung des erfindungsgemäßen Verfahrens wird das Werkstück vor seiner Bereitstellung von einem bandförmigen Stahlwerkstoff abgetrennt, welcher mit einer elektrolytisch aufgebrachten oder einer schmelztauchbeschichteten zinkhaltigen Beschichtung versehen ist, welche insbesondere im kontinuierlichen Beschichtungsprozess appliziert wird. Kontinuierliche Beschichtungsprozesse sind zum einen wirtschaftlich und zum anderen können die geforderten Auflagenstärken gezielt eingestellt werden. Wie die Applikation der unterschiedlichen Auflagenstärken (Differenzbeschichtung) auf den Oberflächen des bandförmigen Stahlwerkstoffs durchgeführt wird, ist in der Fachwelt bekannt.

Vorzugsweise wird der bandförmige Stahlwerkstoff nach der Applikation der zinkhaltigen Beschichtung einer Wärmebehandlung bei einer Temperatur, insbesondere zwischen 200°C und A_{c1}, vorzugsweise zwischen 350°C und A_{c1} und einer Dauer zwischen 5 und 300 s, vorzugsweise zwischen 20 und 240 s unterzogen. Durch die vor dem Warmumformen und/oder Presshärten zusätzlich durchgeführte Wärmebehandlung (Galvannealing) wird die Beschichtung gezielt mit Eisen angereichert, wodurch der Schmelzpunkt der zinkhaltigen Beschichtung angehoben wird und die Bildung von flüssigen Zinkphasen während der Austenitisierung im Material reduziert werden kann. Die Wärmebehandlung erfolgt bevorzugt kontinuierlich, vorzugsweise inline nach dem Beschichtungsprozess. Die Wärmebehandlung kann auch alternativ an einem zu einem Bund (Coil) aufgewickelten bandförmigen Stahlwerkstoff durchgeführt werden, welches beispielsweise unter einer Haube geglüht wird, wobei die Wärmebehandlungszeit mehrere Minuten bis mehrere Stunden betragen kann und die Temperaturspanne in der vorgenannten Größenordnung liegt.

Gemäß einer bevorzugten Ausgestaltung des erfindungsgemäßen Verfahrens wird ein Werkstück verwendet, welches eine erste Oberfläche mit einer Auflagenstärke < 3,5*µm*, besonders bevorzugt < 3*µm* und eine zweite Oberfläche mit einer Auflagenstärke ≥ 5*µm* der zinkhaltigen Beschichtung jeweils im noch nicht pressgehärteten Zustand (Anlieferungszustand) aufweist. Eine Reduzierung der Risse bzw. der Risstiefe insbesondere im kritischen Bereich ist im Wesentlichen erkennbar, wenn die Auflagenstärke < 4*µm* auf der ersten Oberfläche des Werkstücks ist. Um einen ausreichenden kathodischen Korrosionsschutz sicherzustellen, sollte die Auflagenstärke auf der ersten Oberfläche ≥ 1*µm,* insbesondere ≥ 1,5*µm*, besonders bevorzugt ≥ *2µm* betragen. Die Auflagenstärke auf der zweiten Oberfläche beträgt ≤ 25*µm,* insbesondere ≤ 20*µm,* besonders bevorzugt 15*µm,* um den Diffusionsweg zur Eisenanreicherung in der Auflage gering zu halten.

Gemäß einer weiteren Ausgestaltung des erfindungsgemäßen Verfahrens wird das Werkstück nach dem Erwärmen als im Wesentlichen ebenes Werkstück in ein Warmumform- und Presshärtewerkzeug (direkte Warmumformung) oder als bereits kalt vorgeformtes, endgeometrienahes Werkstück in ein Presshärtewerkzeug (indirekte Warmumformung) eingelegt. Die indirekte Warmumformung bietet den Vorteil, dass keine flüssigen Zinkphasen im Material vorliegen und durch das kalte Um-/Vorformen zu einem endgeometrienahen Werkstück kaum Risse bzw. kein nennenswerter Rissfortschritt in den Grundwerkstoff durch die Beanspruchung des Materials insbesondere im kritischen Bereich während der Kaltumformung auftritt. Nach dem Austenitisieren erfolgen im Presshärtewerkzeug ein Abschrecken und ein Kalibrieren, welches einen geringen Formgebungsgrad umfassen kann. Der Nachteil ist, dass ein zusätzlicher Verfahrensschritt, nämlich das Vorformen des Werkstücks, erforderlich ist und damit auch eine zusätzliche Anlageninvestition verbunden ist. Besonders bevorzugt kommt die direkte Warmumformung zum Einsatz. Unter Werkstück ist entweder ein ebenes Stahlblech oder ein kalt, vorgeformtes Stahlteil, welches noch nicht gehärtet ist, gemeint.

Gemäß einer alternativen Ausgestaltung des erfindungsgemäßen Verfahrens wird das Werkstück in einem ersten Werkzeug warmumgeformt und in einem zweiten Werkzeug zumindest teilweise pressgehärtet. Durch die Aufteilung der Prozesse "Warmumformen" und "Presshärten" auf zwei Werkzeuge kann in vorteilhafter Weise die Taktzeit erhöht und damit verbunden die Wirtschaftlichkeit gesteigert werden. Durch den zweigeteilten Prozess muss jedoch sichergestellt sein, dass die Temperatur beim Einlegen des bereits warmumgeformten Werkstücks in das Presshärtewerkzeug die Ms-Temperatur (Martensit-Start-Temperatur) nicht unterschritten wird. Bevorzugt beträgt die Temperatur beim Einlegen mindestens Ms+20K, insbesondere Ms+50K.

Gemäß einer weiteren Ausgestaltung des erfindungsgemäßen Verfahrens wird das Werkstück im Warmumform- und/oder Presshärtewerkzeug beschnitten. Dies hat den Vorteil, dass das Werkstück bevorzugt im noch warmen Zustand relativ einfach beschnitten werden kann, wenn die Temperatur die Ms-Temperatur noch nicht unterschritten hat. Dadurch können zusätzliche mechanische Schneidwerkzeuge, die aufgrund der hohen Härte im fertigen Werkstück (Bauteil) verschleißanfällig sind und eine geringe Standzeit haben bzw. alternative Trennvorrichtungen, wie beispielsweise ein teurer Laserhartbeschnitt, eingespart werden.

Gemäß einer weiteren Ausgestaltung des erfindungsgemäßen Verfahrens wird ein Werkstück verwendet, welches ein Tailored Product ist. Unter Tailored Products sind Tailored Blanks bzw. Tailored Welded Blanks, Tailored Strips bzw. Tailored Welded Strips und Tailored Rolled Blanks bzw. Tailored Rolled Strips zu verstehen, welche in der Fachwelt bekannt sind. Mit Tailored Blanks sowie Tailored Strips mit unterschiedlichen Blechstärken und Tailored Rolled Blanks kann gegenüber Werkstücken mit einer einheitlichen Materialstärke zusätzlich Masse einspart werden. Bei den Tailored Blanks und Tailored Strips können neben unterschiedlichen Blechdicken auch unterschiedliche Stahlwerkstoffe verwendet werden, um im Werkstück unterschiedliche Gefügestrukturen zu berücksichtigen, welche nicht durch das bereits erwähnte "Tailored Tempering" eingestellt werden, d. h. es wird ein vergütbarer Stahlwerkstoff, welcher nach dem Härten ein hartes Gefüge besitzt, mit mindestens einem unvergütbaren, nicht härtbaren Stahlwerkstoff, welches nach dem Härten sein weiches Gefüge im Wesentlichen beibehält, entlang jeweils seiner Fügekante, vorzugsweise mittels Laser im Stumpfstoß miteinander verschweißt. Ein aufwendiges Entschichten der Fügezone, welches bei AlSi-Beschichtungen zwingend erforderlich ist, kann bei zinkhaltigen Beschichtungen entfallen.

Der vergütbare Stahlwerkstoff ist ein Mangan-Bor-Stahl mit einer Zugfestigkeit von mindestens 1500MPa im gehärteten Zustand. Seine Legierungsbestandteile in Gew.-% sind dabei bevorzugt wie folgt begrenzt:

| | |
|---|---|
| C | ≤ 0,5 |
| Si | ≤ 0,7 |
| Mn | ≤ 2,5 |
| S | ≤ 0,01 |
| Al | ≥ 0,015 |
| Ti | ≤ 0,05 |
| Cr+Mo | ≤ 1,0 |
| B | ≤ 0,05 |

Rest Eisen sowie unvermeidbare Verunreinigungen.

Gemäß einer weiteren Ausgestaltung des erfindungsgemäßen Verfahrens wird ein Bauteil mit einem zumindest bereichsweise hutförmigen oder omegaförmigen Profilquerschnitt hergestellt. Insbesondere hat das hergestellte Bauteil die Form einer Halbschale. Halbschalen sind Bauteile, die im eingebauten Zustand vorzugsweise Teile einer A-, B-, C-, D-Säule, eines Schwellers, Längsträgers, Querträgers, einer Crashbox oder einer Fahrwerkskomponente sind.

Gemäß einem zweiten Aspekt der Erfindung wird ein Bauteil für ein Fahrzeug mit einem zumindest bereichsweise hutförmigen oder omegaförmigen Profilquerschnitt, welches zumindest teilweise pressgehärtet ist, insbesondere hergestellt nach dem erfindungsgemäßen Verfahren, angegeben, wobei das Bauteil eine erste Oberfläche mit einer geringeren Auflagenstärke einer zinkhaltigen Beschichtung im Vergleich zur zweiten Oberfläche des Bauteils aufweist. Um Wiederholungen zu vermeiden, wird an dieser Stelle auf das Vorhergesagte verwiesen.

Gemäß einer ersten Ausgestaltung des erfindungsgemäßen Bauteils ist das Bauteil aus einem Tailored Product gebildet, um insbesondere Einfluss auf das Gewicht nehmen zu können. Wenn ein Bauteil unterschiedliche Gefügestrukturen aufweisen soll, kann es alternativ oder kumulativ durch ein "tailored tempering"-Prozess hergestellt sein. Gemäß einem dritten Aspekt betrifft die Erfindung Verwendung des erfindungsgemäßen Bauteils als Karosserieteil eines Fahrzeugs, insbesondere als Teil einer A-, B-, C-, D-Säule, Schweller, Längsträger, Querträger, Crashbox, oder als Fahrwerksteil eines Fahrzeugs, insbesondere als Teil einer Fahrwerkkomponente, besonders bevorzugt in Personenkraftwagen, Nutzfahrzeugen, Lastkraftwagen, Sonderfahrzeugen, Busse, Omnibusse, ob mit Verbrennungsmotor und/oder elektrischem Antrieb, aber auch in gleisgebundenen Fahrzeugen, wie beispielsweise Straßenbahnen oder personenbefördernden Waggons.

Im Folgenden wird die Erfindung anhand einer Ausführungsbeispiele darstellenden Zeichnung näher erläutert. Gleiche Teile sind mit gleichen Bezugszeichen versehen. Es zeigt
- Figur 1):: eine schematische Abfolge von Schritten zum Herstellen eines Bauteils für ein Fahrzeug gemäß einer ersten Ausgestaltung eines erfindungsgemäßen Verfahrens,
- Figur 2):: eine Teilquerschnittsansicht eines ersten Ausführungsbeispiels eines erfindungsgemäßen Bauteils,
- Figur 3a, b):: Querschliffe des in Fig. 2 gezeigten kritischen Bereichs von warmumgeformten und pressgehärteten Bauteilen, wobei die Auflagenstärke von 5*µm* und 3*µm* im nicht pressgehärteten Zustand (Anlieferungszustand) betrug.

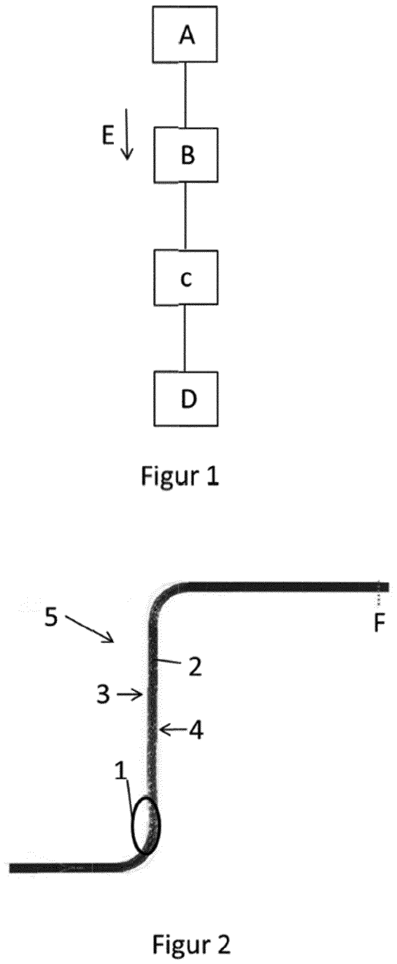

In Figur 1 ist schematisch eine Abfolge (E) von Schritten zum Herstellen eines Bauteils für ein Fahrzeug gemäß einer ersten Ausgestaltung eines erfindungsgemäßen Verfahrens dargestellt. Das erfindungsgemäße Verfahren umfasst zunächst den Schritt (A) des Bereitstellens eines Werkstücks aus einem vergütbaren Stahlwerkstoff, welches beidseitig mit einer zinkhaltigen Beschichtung versehen ist. Das Werkstück weist eine erste Oberfläche 3 mit einer Auflagenstärke < 4*µm,* insbesondere < 3,5*µm*, besonders bevorzugt < 3*µm* und eine zweite Oberfläche 4 mit einer Auflagenstärke ≥ 4,5*µm*, besonders bevorzugt ≥ 5*µm* der zinkhaltigen Beschichtung jeweils im noch nicht pressgehärteten Zustand (Anlieferungszustand) auf.

Hier nicht dargestellt, wird das Werkstück vor seiner Bereitstellung von einem bandförmigen Stahlwerkstoff abgetrennt, welcher mit einer elektrolytisch aufgebrachten oder einer schmelztauchbeschichteten zinkhaltigen Beschichtung versehen ist, welche insbesondere im kontinuierlichen Beschichtungsprozess appliziert wurde. Vergütbare Stahlwerkstoffe sind im Wesentlichen Mangan-Bor-Stähle. Ein weiterer Schritt (B) umfasst zumindest ein teilweises Erwärmen, vorzugsweise vollständiges Erwärmen des Werkstücks auf eine Temperatur oberhalb von A_{c1}, insbesondere oberhalb von A_{c3}. Das Werkstück wird zunächst partiell oder vollständig auf Austenitisierungstemperatur erwärmt, wobei je nach Anforderung des zu fertigenden Bauteils sowie dessen Verwendungszweck im Fahrzeug im Werkstück unterschiedliche Gefügestrukturen oder eine durchgehend einheitliche Gefügestruktur eingestellt werden können. Dies kann über entsprechende Öfen erfolgen. Als Werkstücke kommen monolithische Stahlwerkstoffe mit einer einheitlichen Materialstärke, beispielsweise mit Materialstärken zwischen 0,5 und 6 mm, insbesondere zwischen 0,8 und 4 mm zum Einsatz oder Tailored Products.

Die Temperatur zum Erwärmen (Durchwärmen) vorzugsweise in einem Ofen (Durchlaufofen) beträgt beispielsweise 850 bis 930°C mit einer Verweilzeit beispielsweise zwischen 3 und 12 min. Nach dem Erwärmen erfolgt das Einlegen des zumindest teilweise, vorzugsweise vollständig warmen Werkstücks in ein Warmumform- und/oder Presshärtewerkzeug (Schritt C), welches mindestens einen Stempel und mindestens eine Matrize umfasst. Es muss sichergestellt werden, dass das Werkstück, welches eine erste Oberfläche mit einer geringeren Auflagenstärke der zinkhaltigen Beschichtung im Vergleich zur zweiten Oberfläche des Werkstücks aufweist, derart in das Warmumform- und/oder Presshärtewerkzeug eingelegt wird, wobei die erste Oberfläche des Werkstücks mit der überwiegend konkav ausgebildeten Werkzeugseite, vorzugsweise mit der Matrize des Werkzeugs und die zweite Oberfläche des Werkstücks mit der überwiegend konvex ausgebildeten Werkzeugseite, vorzugsweise mit dem Stempel des Werkzeugs in Kontakt gebracht wird. Dies kann beispielsweise mit hier nicht dargestellten und geeigneten Mitteln, beispielsweise Messsysteme, wie z. B. Wärmebildkameras etc., überprüft werden, nämlich bereits im Bereich des Beschickens des Ofens und/oder am Ausgang des Ofens und/oder vor dem Einlegen in das Werkzeug, um ein falsches Einlegen zu vermeiden. Durch die Reduzierung der Auflagenstärke der zinkhaltigen Beschichtung auf der ersten Oberfläche 3 des Werkstücks, welche vorzugsweise mit der Matrize des Werkzeugs in Kontakt gebracht wird, können gegenüber in der Praxis üblichen Auflagenstärken die Risse respektive zu hohe Risstiefen im kritischen Bereich 1 auf ein Maß reduziert werden, welche den Anforderungen an die Bauteilfestigkeit im Crashfall und der Lebensdauererwartung insbesondere bei zyklischen Belastungen genügen. Durch das Herabsenken der Auflagenstärke reduziert sich auch das Zink-Angebot und somit können weniger flüssige Zinkphasen während des Erwärmungsprozesses im Material entstehen, welche das Material schwächen.

Das Zufahren des Werkzeugs durch Relativbewegung des Stempels und/oder der Matrize zueinander und Warmumformen und/oder Presshärten des Werkstücks umfasst einen weiteren Schritt (D), wobei zumindest ein Bereich des warmen Werkstücks im geschlossenen Werkzeug derart abgekühlt wird, dass sich zumindest teilweise ein Härtegefüge ausbildet. Zumindest wird das Werkstück vollständig oder partiell gehärtet, was durch eine schnelle Abkühlung in einem insbesondere aktiv gekühlten Werkzeug im Zuge des Warmumformens und Presshärtens (direkte Warmumformung) oder im Zuge des Presshärtens (indirekte Warmumformung) erfolgt, wobei sich die Gefügestruktur des zumindest teilweise austenitisierten Bereichs des Werkstücks durch schroffes Abkühlen in ein martensitisches und/oder bainitisches Gefüge umwandelt, wobei das Erzielen eines martensitischen Gefüges besonders bevorzugt ist. Sind unterschiedliche Gefügestrukturen im Werkstück gefordert, kann durch den "tailored tempering"-Prozess oder alternativ durch die Verwendung von beispielsweise einem Tailored Blank, welches mindestens aus einem vergütbaren und mindestens aus einem unvergütbaren Stahlwerkstoff zusammengesetzt ist, mindestens ein Bereich mit einem harten Gefüge und mindestens ein Bereich mit einem weichen Gefüge, welches gegenüber dem harten Gefüge duktiler ist, eingestellt werden. Die direkte Warmumformung ist besonders bevorzugt.

Aus dem Werkstück mit Differenzbeschichtung werden durch die indirekte und bevorzugt direkte Warmumformung Bauteile, welche bereichsweise einen hutförmigen oder omegaförmigen Profilquerschnitt 5 aufweisen, hergestellt. Insbesondere hat das hergestellte Bauteil die Form einer Halbschale. Halbschalen sind Bauteile, die im eingebauten Zustand vorzugsweise Teile einer A-, B-, C-, D-Säule, eines Schwellers, eines Längsträgers, eines Querträgers, einer Crashbox, oder einer Fahrwerkskomponente sind. Hier nicht dargestellt, können warmumgeformten Teile auch andere Profilquerschnitte aufweisen, welche beispielsweise als Anbauteile, insbesondere als Teil einer Felge, vorzugsweise als Radschüssel einer Felge verwendet werden. In Figur 2 ist eine Teilquerschnittsansicht eines ersten Ausführungsbeispiels eines erfindungsgemäßen Bauteils, beispielsweise in Form einer B-Säule dargestellt. Dabei ist ein Querschnitt entlang einer Bauteilachse F dargestellt, wobei das Bauteil zumindest in diesem Querschnitt um die Achse F symmetrisch aufgebaut sein kann. Eine B-Säule weist einen längsveränderlichen Querschnitt entlang seiner Bauteilachse auf. Insbesondere bei der bevorzugten direkten Warmumformung erfährt die erste Oberfläche 3 des Werkstücks, welche während des Warmumformens und Presshärtens mit der Matrize in Kontakt steht, eine hohe Druck-Zug-Beanspruchung, wodurch sich im kritischen Bereich (1) durch die erwärmungsbedingten entstehenden flüssigen Zinkphasen, welche das Material schwächen, Risse mit hohen Risstiefen, welche in den Grundwerkstoff reichen, ausbilden. Die zweite Oberfläche 4 des Werkstücks, welche während des Warmumformens und Presshärtens mit dem Stempel in Kontakt steht, erfährt eine im Vergleich zur ersten Oberfläche niedrigere Druck-Zug-Beanspruchung, wodurch die Gefahr einer zu tiefen Rissausbildung auf der der Stempel zugewandten Seite nicht gegeben ist. Derartige Bauteile respektive Halbschalen werden vorzugsweise mit weiteren Bauteilen oder Halbschalen zu einem einen Hohlraum aufweisenden Profil gefügt. Die erste Oberfläche 3 des Bauteils mit der verringerten Auflagenstärke der zinkhaltigen Beschichtung (im Anlieferungszustand) weißt demnach bauteilbedingt eine außenliegende Seite auf. Die zweite Oberfläche 4, welche eine im Vergleich zur ersten Oberfläche 3 höhere Auflagenstärke der zinkhaltigen Beschichtung aufweist, weißt demnach bauteilbedingt eine innenliegende, im Hohlraum befindliche Seite auf. Insbesondere in Hohlräumen kann bei Eintritt eines korrosiven Mediums erhöhte Gefahr von Korrosion vorliegen. In der Regel werden Sekundärmaßnahmen, wie z. B. eine Hohlraumversiegelung mittels Wachs in diesen Bereichen vorgenommen. Mit einer entsprechenden (höheren) Auflagenstärke der zinkhaltigen Beschichtung auf der zweiten Oberfläche 4 kann erfindungsgemäß ein aktiver Langzeit-Korrosionsschutz bereitgestellt werden.

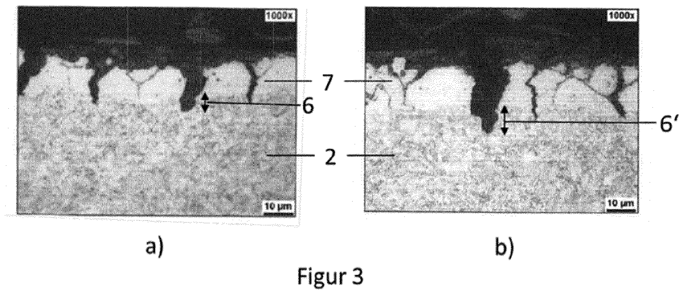

Zwecks Untersuchung der Rissbildung wurden aus dem kritischen Bereich 1 von warmumgeformten und pressgehärteten Bauteilen 5, wobei die Beschichtung 7 nach der Glühbehandlung und dem anschließenden Warmumformen und Presshärten temperaturbedingt mit Eisen angereichert ist, zwei Proben entnommen, um Schliffbilder erstellen zu können. Die Ofentemperatur betrug 880°C mit einer Verweilzeit von 6 min. Die pressgehärteten Bauteile wurden aus einem Mangan-Bor-Stahl (22MnB5) mit einer zumindest auf der ersten Oberfläche 3 elektrolytisch aufgebrachte zinkhaltigen Beschichtung und einer Auflagenstärke von 3*µm* (Figur 3a) und 5*µm* (Figur 3b) vor dem Presshärten im Anlieferungszustand hergestellt. In der mit Eisen angereicherten Beschichtung ist in den Schliffbildern zu erkennen, dass bei Auflagenstärken der zinkhaltigen Beschichtung ≥ 4*µm* (im Anlieferungszustand) Risse mit hohen Risstiefen 6' vorliegen, welche bis in den Grundwerkstoff 2 hineinreichen. Die Risstiefen 6' in den Grundwerkstoff betragen ≥ 10*µm* (Figur 3b), wodurch eine ausreichende Bauteilfestigkeit im Crashfall und Lebensdauererwartung insbesondere bei zyklischer Belastung nicht mehr gewährleistet werden kann. Anders verhält sich die Rissausbildung bei niedrigen Auflagestärken der zinkhaltigen Beschichtung < 4*µm* (im Anlieferungszustand). Die Risstiefe 6 in den Grundwerkstoff 2 kann auf maximal 10*µm* reduziert werden, wodurch eine ausreichende Bauteilfestigkeit im Crashfall und Lebensdauererwartung insbesondere bei zyklischer Belastung gewährleistet werden kann. Um einen ausreichenden kathodischen Korrosionsschutz sicherzustellen, beträgt die Auflagenstärke auf der ersten Oberfläche 3 ≥ 1*µm,* insbesondere ≥ 1,5*µm*, besonders bevorzugt ≥ 2*µm* im noch nicht pressgehärteten Zustand (im Anlieferungszustand). Die Auflagenstärke auf der zweiten Oberfläche 4 ist auf ≤ 25*µm,* insbesondere ≤ 20*µm,* besonders bevorzugt 15*µm* beschränkt.

### Bezugszeichenliste

- A, B, C, D: Schrittfolge, Verfahrensschritte
- E: Prozessrichtung
- F: Bauteilachse
- 1: kritischer Bereich
- 2: vergütbarer Stahlwerkstoff, Grundwerkstoff
- 3: erste Oberfläche des Stahlwerkstoffs
- 4: zweite Oberfläche des Stahlwerkstoffs
- 5: pressgehärtetes Bauteil
- 6,6': Risstiefe
- 7: Beschichtung nach der Glühbehandlung und dem anschließenden Warmumformen und Presshärten

## Patentansprüche

1. Verfahren zum Herstellen eines Bauteils (5) mit einem zumindest bereichsweise hutförmigen oder omegaförmigen Profilquerschnitt für ein Fahrzeug, umfassend folgende Schritte:
- (A) Bereitstellen eines Werkstücks aus einem vergütbaren Stahlwerkstoff (2), welches beidseitig mit einer zinkhaltigen Beschichtung versehen ist,
- (B) zumindest teilweises Erwärmen des Werkstücks auf eine Temperatur oberhalb von Ac1,
- (C) Einlegen des zumindest teilweise warmen Werkstücks in ein Warmumform- und/oder Presshärtewerkzeug, welches mindestens einen Stempel und mindestens eine Matrize umfasst,
- (D) Zufahren des Werkzeugs durch Relativbewegung des Stempels und/oder der Matrize zueinander und Warmumformen und/oder Presshärten des Werkstücks, wobei zumindest ein Bereich des warmen Werkstücks im geschlossenen Werkzeug derart abgekühlt wird, dass sich zumindest teilweise ein Härtegefüge ausbildet,
**dadurch gekennzeichnet, dass**
das Werkstück eine erste Oberfläche (3) mit einer geringeren Auflagenstärke der zinkhaltigen Beschichtung im Vergleich zur zweiten Oberfläche (4) des Werkstücks aufweist, wobei das Werkstück derart in das Warmumform- und/oder Presshärtewerkzeug eingelegt wird, dass die erste Oberfläche (3) des Werkstücks auf der bei der Bauteilfertigung überwiegend auf Druck und/oder Zug belasteten Seite der überwiegend konkav ausgebildeten Werkzeugseite positioniert wird, wobei ein Werkstück verwendet wird, welches eine erste Oberfläche (3) mit einer Auflagenstärke < 4*µm* und eine zweite Oberfläche (4) mit einer Auflagenstärke ≥ 4,5*µm* jeweils im noch nicht pressgehärteten Zustand aufweist.

2. Verfahren nach Anspruch 1,
**dadurch gekennzeichnet, dass**
das Werkstück vor seiner Bereitstellung von einem bandförmigen Stahlwerkstoff abgetrennt wird, welcher mit einer elektrolytisch aufgebrachten oder einer schmelztauchbeschichteten zinkhaltigen Beschichtung versehen ist.

3. Verfahren nach Anspruch 2,
**dadurch gekennzeichnet, dass**
der bandförmige Stahlwerkstoff nach dem Auftrag der zinkhaltigen Beschichtung einer Wärmebehandlung bei einer Temperatur, insbesondere zwischen 200°C und Ac1, vorzugsweise zwischen 350°C und Ac1 und einer Dauer zwischen 5 und 300 s, vorzugsweise zwischen 20 und 240 s unterzogen wird.

4. Verfahren nach einem der vorgenannten Ansprüche,
**dadurch gekennzeichnet, dass**
ein Werkstück verwendet wird, welches eine erste Oberfläche (3) mit einer Auflagenstärke < 3,5*µm*, besonders bevorzugt < 3*µm* und eine zweite Oberfläche (4) mit einer Auflagenstärke ≥ 5*µm* der zinkhaltigen Beschichtung jeweils im noch nicht pressgehärteten Zustand aufweist.

5. Verfahren nach einem der vorgenannten Ansprüche,
**dadurch gekennzeichnet, dass**
das Werkstück nach dem Erwärmen als ebenes Werkstück in ein Warmumform- und Presshärtewerkzeug oder als bereits kalt vorgeformtes, endgeometrienahes Werkstück in ein Presshärtewerkzeug eingelegt wird.

6. Verfahren nach einem der Ansprüche 1 bis 4,
**dadurch gekennzeichnet, dass**
das Werkstück in einem ersten Werkzeug warmumgeformt und in einem zweiten Werkzeug zumindest teilweise pressgehärtet wird.

7. Verfahren nach einem der vorgenannten Ansprüche,
**dadurch gekennzeichnet, dass**
das Werkstück im Warmumform- und/oder Presshärtewerkzeug beschnitten wird.

8. Verfahren nach einem der vorgenannten Ansprüche,
**dadurch gekennzeichnet, dass**
ein Werkstück verwendet wird, welches ein Tailored Product ist.

9. Verfahren nach einem der vorgenannten Ansprüche,
**dadurch gekennzeichnet, dass**
ein Bauteil (5) in Form einer Halbschale, vorzugsweise als Teil einer A-, B-, C-, D-Säule, eines Schwellers, eines Längsträgers, eines Querträgers, einer Crashbox oder einer Fahrwerkskomponente.

10. Bauteil (5) für ein Fahrzeug mit einem zumindest bereichsweise hutförmigen oder omegaförmigen Profilquerschnitt, welches zumindest teilweise pressgehärtet ist, hergestellt nach einem der Ansprüche 1 bis 9,
**dadurch gekennzeichnet, dass**
das Bauteil eine erste Oberfläche (3) mit einer geringeren Auflagenstärke einer zinkhaltigen Beschichtung im Vergleich zur zweiten Oberfläche (4) des Bauteils (5) aufweist.

11. Bauteil nach Anspruch 10,
**dadurch gekennzeichnet, dass**
das Bauteil (5) aus einem Tailored Product gebildet ist.

12. Verwendung eines Bauteils (5) nach einem der Ansprüche 10 oder 11 als Karosserieteil eines Fahrzeugs, insbesondere als Teil einer A-, B-, C-, D-Säule, eines Schwellers, eines Längsträgers, eines Querträgers, einer Crashbox, oder als Fahrwerksteil eines Fahrzeugs, insbesondere als Teil einer Fahrwerkkomponente.

## Claims

1. Method of producing a component (5) having a profile cross section which is hat-shaped or omega-shaped at least in some regions for a vehicle, comprising the following steps:
- (A) providing a workpiece composed of a heat-treatable steel material (2) provided with a zinc-containing coating on either side,
- (B) at least partly heating the workpiece to a temperature above Ac1,
- (C) inserting the at least partly hot workpiece into a hot-forming and/or press-hardening mold comprising at least one male part and at least one female part,
- (D) closing the mold by relative movement of the male part and/or the female part toward one another and hot-forming and/or press-hardening the workpiece, with cooling of at least one region of the hot workpiece in the closed mold in such a way that there is at least partial formation of a hardened microstructure,
**characterized in that**
the workpiece has a first surface (3) having a smaller coating thickness of the zinc-containing coating compared to the second surface (4) of the workpiece, wherein the workpiece is inserted into the hot-forming and/or press-hardening mold in such a way that the first surface (3) of the workpiece is positioned on the side of the predominantly concave mold side that is predominantly subjected to compression and/or tension in the component manufacture, wherein a workpiece having a first surface (3) having a coating thickness <4 µ*m* and a second surface (4) having a coating thickness ≥ 4.5 µ*m* is used, in each case in the as of yet non-press-hardened condition.

2. Method according to Claim 1,
**characterized in that**
the workpiece, prior to the provision thereof, is separated from a steel material in strip form which has been provided with a zinc-containing coating applied electrolytically or by hot dip coating.

3. The method according to Claim 2,
**characterized in that**
the steel material in strip form, after the application of the zinc-containing coating, is subjected to a heat treatment at a temperature especially between 200°C and Ac1, preferably between 350°C and Ac1, for a period of time between 5 and 300 s, preferably between 20 and 240 s.

4. Method according to any of the preceding claims,
**characterized in that**
a workpiece having a first surface (3) having a coating thickness < 3.5 µm, more preferably < 3 µm, and a second surface (4) having a coating thickness ≥ 5 µm, of the zinc-containing coating is used, in each case in the as yet non-press-hardened condition.

5. Method according to any of the preceding claims,
**characterized in that**
the workpiece, after being heated, is inserted as a flat workpiece into a hot-forming and press-hardening mold, or as an already cold-formed workpiece of near net geometry into a press-hardening mold.

6. Method according to any of Claims 1 to 4,
**characterized in that**
the workpiece is hot-formed in a first mold and at least partly press-hardened in a second mold.

7. Method according to any of the preceding claims,
**characterized in that**
the workpiece is trimmed in the hot-forming and/or press-hardening mold.

8. Method according to any of the preceding claims,
**characterized in that**
a workpiece which is a tailored product is used.

9. Method according to any of the preceding claims,
**characterized in that**
a component (5) in the form of a half shell, preferably as part of an A, B, C, D pillar, a door sill, a longitudinal beam, a transverse beam, a crash box or a chassis component.

10. Component (5) for a vehicle which has a profile cross section which is hat-shaped or omega-shaped at least in some regions, and which has been at least partly press-hardened, produced according to any of Claims 1 to 9,
**characterized in that**
the component has a first surface (3) having a smaller coating thickness of a zinc-containing coating compared to the second surface (4) of the component (5).

11. Component according to Claim 10,
**characterized in that**
the component (5) has been formed from a tailored product.

12. Use of a component (5) according to either of Claims 10 and 11 as bodywork component of a vehicle, especially as part of an A, B, C, D pillar, of a door sill, of a longitudinal beam, of a transverse beam, of a crash box, or in the form of a chassis part of a vehicle, especially as part of a chassis component.

## Revendications

1. Procédé de fabrication d'un élément structural (5), présentant une section transversale de profilé en forme de chapeau ou en forme d'oméga au moins dans certaines régions, pour un véhicule, comportant les étapes suivantes :
- (A) fourniture d'une pièce constituée d'un matériau en acier (2) pouvant être trempé et revenu, laquelle est dotée des deux côtés d'un revêtement contenant du zinc,
- (B) chauffage au moins partiel de la pièce à une température supérieure à Ac1,
- (C) insertion de la pièce au moins partiellement chaude dans un outil de formage à chaud et/ou de trempe à la presse, lequel comporte au moins un poinçon et au moins une matrice,
- (D) fermeture de l'outil par déplacement relatif du poinçon et/ou de la matrice l'un par rapport à l'autre et formage à chaud et/ou trempe à la presse de la pièce, au moins une région de la pièce chaude étant refroidie dans l'outil fermé de telle sorte qu'une structure de trempe se forme au moins partiellement,
**caractérisé en ce que**
la pièce comprend une première surface (3) présentant une épaisseur de revêtement plus faible du revêtement contenant du zinc que la deuxième surface (4) de la pièce, la pièce étant insérée dans l'outil de formage à chaud et/ou de trempe à la presse de telle sorte que la première surface (3) de la pièce soit positionnée sur le côté de la face d'outil formée principalement de manière concave, lequel côté est sollicité principalement en compression et/ou en traction lors de la fabrication de l'élément structural, une pièce étant utilisée, laquelle comprend une première surface (3) présentant une épaisseur de revêtement < 4 µm et une deuxième surface (4) présentant une épaisseur de revêtement ≥ 4,5 µm respectivement à l'état non encore trempé à la presse.

2. Procédé selon la revendication 1,
**caractérisé en ce que**
la pièce est, avant d'être fournie, séparée d'un matériau en acier en forme de bande, lequel est doté d'un revêtement contenant du zinc appliqué de manière électrolytique ou appliqué par galvanisation à chaud.

3. Procédé selon la revendication 2,
**caractérisé en ce que**
le matériau en acier en forme de bande est, après l'application du revêtement contenant du zinc, soumis à un traitement thermique à une température comprise en particulier entre 200 °C et Ac1, de préférence entre 350 °C et Ac1 et pendant une durée comprise entre 5 et 300 s, de préférence entre 20 et 240 s.

4. Procédé selon l'une des revendications précédentes,
**caractérisé en ce**
**qu'**une pièce est utilisée, laquelle comprend une première surface (3) présentant une épaisseur de revêtement < 3,5 µm, de manière particulièrement préférée < 3 µm, et une deuxième surface (4) présentant une épaisseur de revêtement ≥ 5 µm du revêtement contenant du zinc respectivement à l'état non encore trempé à la presse.

5. Procédé selon l'une des revendications précédentes,
**caractérisé en ce que**
la pièce est, après le chauffage, insérée en tant que pièce plane dans un outil de formage à chaud et de trempe à la presse ou en tant que pièce déjà préformée à froid et de géométrie presque finale dans un outil de trempe à la presse.

6. Procédé selon l'une des revendications 1 à 4,
**caractérisé en ce que**
la pièce est formée à chaud dans un premier outil et est trempée à la presse au moins partiellement dans un deuxième outil.

7. Procédé selon l'une des revendications précédentes,
**caractérisé en ce que**
la pièce est débordée dans un outil de formage à chaud et/ou de trempe à la presse.

8. Procédé selon l'une des revendications précédentes,
**caractérisé en ce**
**qu'**une pièce est utilisée, laquelle est un produit sur mesure.

9. Procédé selon l'une des revendications précédentes,
**caractérisé en ce**
**qu'**un élément structural (5) sous la forme d'une demi-coque, de préférence en tant que partie d'un montant A, B, C, D, d'un bas de caisse, d'un longeron, d'une traverse, d'une boîte-tampon ou d'un composant de train roulant.

10. Élément structural (5) pour un véhicule, présentant une section transversale de profilé en forme de chapeau ou en forme d'oméga au moins dans certaines régions, lequel est trempé à la presse au moins partiellement, fabriqué selon l'une des revendications 1 à 9,
**caractérisé en ce que**
la pièce comprend une première surface (3) présentant une épaisseur de revêtement plus faible d'un revêtement contenant du zinc que la deuxième surface (4) de la pièce (5).

11. Élément structural selon la revendication 10,
**caractérisé en ce que**
l'élément structural (5) est formé à partir d'un produit sur mesure.

12. Utilisation d'un élément structural (5) selon la revendication 10 ou 11 en tant que partie de carrosserie d'un véhicule, en particulier en tant que partie d'un montant A, B, C, D, d'un bas de caisse, d'un longeron, d'une traverse, d'une boîte-tampon ou en tant que partie de train roulant, en particulier en tant que partie d'un composant de train roulant.
